# EUROPEAN PATENT APPLICATION

(11) **EP 1 591 022 A1**
(43) Date of publication of application: **02.11.2005**
(21) Application number: 04252462.9
(22) Date of filing: 28.04.2004
(51) Int. Cl.: A23L 3/18, A23B 7/005

(54) **Heat treatment apparatus, method and product obtained from same**

(71) Applicant: Red Deer Herbs Limited, Worcester, WR8 9DF (GB)
(72) Inventor: Mole, Alan, Pershore, WR10 3BB (GB); Herbert, Robert Austen, Earl's Croome, Worcester, WR8 9DF (GB)
(74) Representative: Higgins, Michael Roger

(57) **Abstract**

Heat treatment apparatus for surface decontamination of produce having an original state. The apparatus comprises a heating chamber 12 having an interior cavity 14 in which is defined a cavity space 14a exposed to atmospheric pressure, an inlet 16 for the insertion of the produce into the interior cavity 14 and cavity space 14a, and an outlet 18 for the discharge of the produce from the interior cavity 14. A conveyor 22, on which the produce can be conveyed, communicates with the produce inlet 16, the produce outlet 18 and the cavity space 14a. Means for heating the surface of the produce to a first temperature and then a second temperature, which is higher than the first temperature, when the produce is in the cavity space 14a; the arrangement and/or conditions being such that, on discharge, any surface liquid present on the produce is rapidly boiled off. The surface of the produce is thus decontaminated or substantially decontaminated and the original, or substantially original, state of the produce is retained. A method and produce are also provided.

## Description

This invention relates to heat treatment apparatus for surface decontamination of produce, a method of heat treating produce, and produce resulting from the method.

Heat treatment is a well-recognised method of decontaminating the surface of produce, such as food and their ingredients, while retaining the original or substantially original state of the produce.

The application of heat treatment to heat sensitive material, such as aromatic green leaves, for example herbs, or aromatic ingredients, for example spices, usually requires a pressurised heating chamber to retain the aromatic oils and flavours volatilised by the heating process. The need for such a pressurised heating chamber results in slower production and increased costs.

The present invention seeks to overcome these problems.

According to a first aspect of the present invention, there is provided heat treatment apparatus for surface decontamination of produce having an original state, the apparatus comprising a heating chamber having an interior cavity in which is defined a cavity space exposed to atmospheric pressure, an inlet for the insertion of the produce into the interior cavity and cavity space, and an outlet for the discharge of the produce from the interior cavity; a conveyor on which the produce can be conveyed and which is in communication with the produce inlet, the produce outlet and the cavity space; means for heating the surface of the produce to a first temperature and then a second temperature, which is higher than the first temperature, when the produce is in the cavity space; the arrangement and/or conditions being such that, on discharge, any surface liquid present on the produce is rapidly boiled off so that the surface of the produce is decontaminated or substantially decontaminated and the said original, or substantially original, state of the produce is retained.

The use of the term 'decontaminate' is, throughout this specification, intended to mean producing a significant reduction in the natural microbial levels. This allows for safer human consumption.

The use of the term 'produce' is, throughout this specification, intended to mean food substances, such as food and ingredients.

Preferable and/or optional features of the first aspect of the present invention are set forth in claims 2 to 5, inclusive.

According to a second aspect of the present invention, there is provided a method of decontaminating the exterior surface of produce without altering, or substantially altering, the original state of the produce, the method comprising the steps of:
a) raising only the exterior surface of the produce to, or substantially to, 100°C;
b) further raising only the exterior surface of the produce to above 100°C; and
c) rapidly boiling off any surface liquid present on the produce.

Preferable and/or optional features of the second aspect of the invention are set forth in claims 7 and 8.

According to a third aspect of the present invention, there is provided a method in accordance with the second aspect of the invention, using heat treatment apparatus in accordance with the first aspect of the invention.

According to a fourth aspect of the present invention, there is provided decontaminated produce produced using a method in accordance with the second and/or third aspects of the present invention.

The invention will now be described, by way of example, with reference to the accompanying drawings, in which :
Figure 1 is a diagrammatic cross-sectional side view of one embodiment of heat treatment apparatus, in accordance with the present invention; and

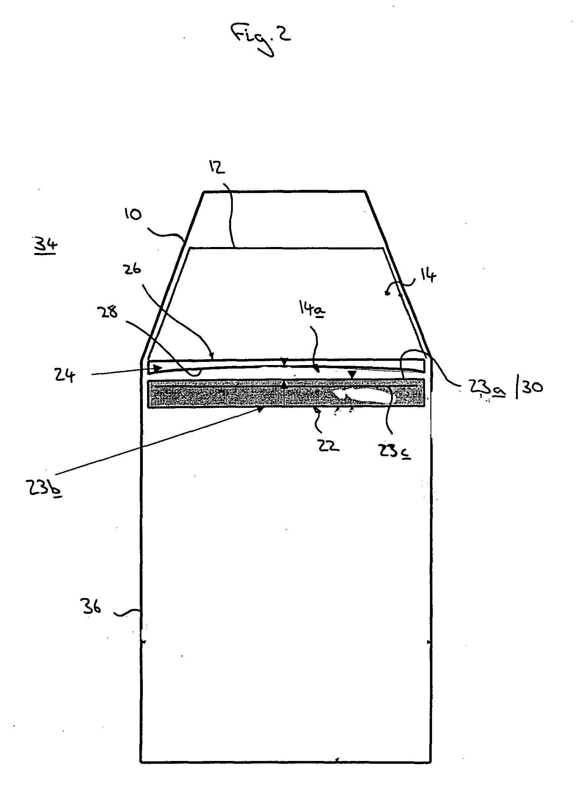

Figure 2 is a view of the heat treatment apparatus, taken along the line A-A in Figure 1.

Heat treatment apparatus, as shown in the drawings, comprises an insulated enclosure 10 and a heating chamber 12 surrounded by the enclosure 10. The heating chamber 12 has an interior cavity 14 which is permanently exposed to ambient atmospheric pressure, an inlet 16 to the interior cavity 14, and an outlet 18 from the interior cavity 14. The heating chamber inlet 16 and outlet 18 are in open and direct communication with respective openings 20 in the insulated enclosure 10.

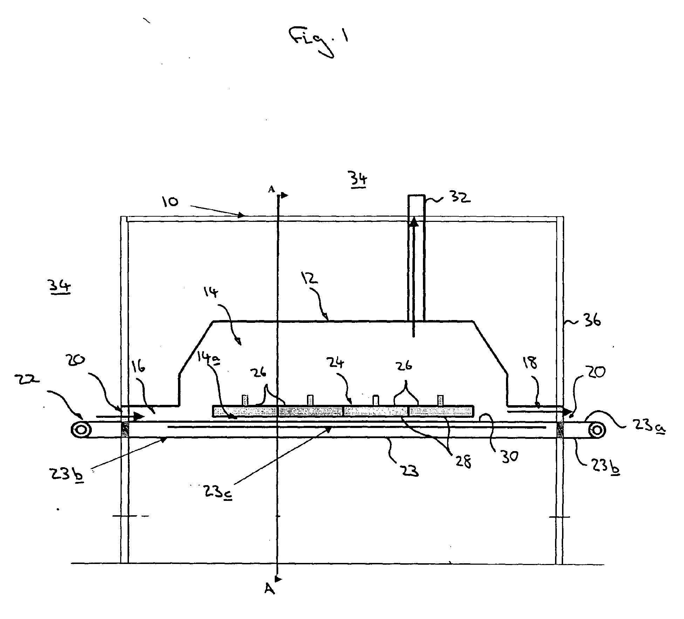

The heat treatment apparatus also comprises a conveyor 22 having an endless conveyor belt 23. The conveyor 22 is positioned to run between the openings 20 of the insulated enclosure 10 and to communicate the inlet 16, outlet 18 and interior cavity 14 of the heating chamber 12. As can be seen in Figure 1, the conveyor 22 projects through the openings 20 of the insulated enclosure 10 to permit ease of access. The heating chamber 12 thus only covers part of the conveyor 22.

The conveyor 22 includes support means interposed between top and bottom runs 23a and 23b of the conveyor belt 23 for supporting the top run 23a of the conveyor belt 23 against gravity. In this embodiment, the support means takes the form of an elongate plate member 23c. However, the support means could take the form of roller members.

Means for heating the produce when received on the conveyor belt 23, and means for heating the interior cavity 14 to above 100°C are also provided.

The produce heating means is in the form of a superheated steam supply (not shown) and a superheated steam outlet 24, which is positioned within the interior cavity 14 of the heating chamber 12 and which is fed by the superheated steam supply. The superheated steam outlet 24 is in the form of a series of plenum manifolds 26 (four being shown in Figure 1), each having a perforated concave lower surface 28 positioned adjacent the top surface 30 of the conveyor 22 to define a cavity space 14a therebetween. The plenum manifolds 26 are dimensioned to extend across the width of the conveyor 22, but only extend over part of the longitudinal extent of the conveyor 22.

The superheated steam of the superheated steam supply is at a pressure which is greater than atmospheric pressure. Preferably, the superheated steam is at a pressure of between 0 and 44 psi (0 to 30,932 kg/m²). However, the superheated steam may be at a higher pressure. The pressure at which the superheated steam is supplied can be controlled by an external controller.

The plenum manifolds 26 are supported within the heating chamber 12 via any suitable means (not shown) which enable the distance between the lower perforated surfaces 28 and the top surface 30 of the conveyor 22 to be adjusted. The distance adjustment means may allow independent adjustment of each plenum manifold 26.

The cavity heating means comprises radiant plates, formed by the in use perforated lower surfaces 28 of the plenum manifolds 26 and the elongate plate member 23c of the conveyor 22; the superheated steam from the superheated steam supply, when discharged from the plenum manifolds 26; and apparatus warming means (not shown) for heating the apparatus within the insulated enclosure 10. The warming means may, for example, take the form of a radiator arrangement positioned beneath, and/or between, the conveyor, steam, hot air or direct gas heating.

Other elements could be additionally, or alternatively, incorporated as part of the cavity heating means, such as hot air heating means or any other suitable means which aid in heating the interior cavity 14 and, particularly, the cavity space 14a.

An exhaust outlet 32 is provided to exhaust steam from the interior cavity 14 to the exterior 34 of the insulated enclosure 10.

Temperature sensors (not shown) are provided as part of the heat treatment apparatus to monitor temperatures. The sensors provide feedback to the controller which can be used to control the temperature of, for example, the interior cavity 14 of the heating chamber 12 by regulating the superheated steam supply and/or the steam exhaust 32. The controller (not shown) is typically situated on the exterior 36 of the insulated enclosure 10 for ease of access by an operator.

The heat treatment apparatus is also provided with a settable depth control loading guide (not shown) to prevent the depth of produce loaded thereon from impacting the operation of the heat treatment process.

To prevent, or reduce the chance of, condensation forming on surfaces within the heating chamber 12, the apparatus is pre-heated prior to the introduction of produce to a temperature of, or preferably in excess of, 100°C using the warming means of the cavity heating means.

The loading guide is set in accordance with the general dimensions of the produce to be processed, so that only a single, or substantially single, layer of produce travels on the conveyor 22. The distance between the plenum manifolds 26 and the conveyor 22 are adjusted, again in accordance with the general dimensions of the produce to be processed. And the speed of the conveyor is set depending on the produce to be decontaminated.

Other factors may also be controlled, depending on the produce to be heat treated, such as the pressure at which the superheated steam is delivered to the plenum manifolds 26, and the temperature at which the apparatus and interior space 14 are maintained.

During operation of the heat treatment apparatus, the conveyor 22 is operated continuously and can treat a continuous flow of produce.

In a first stage of the heat treatment process, produce, being for example meat, poultry, frozen fish, dried vegetables, herbs and/or spices, to be decontaminated and having an original state, such as frozen, unfrozen, or cooked, is loaded on the conveyor 22 at the projecting end adjacent to the heating chamber inlet 16. The produce travels through the insulated enclosure opening 20 and heating chamber inlet 16, into the interior cavity 14 and the cavity space 14a beneath the plenum manifolds 26.

In a second stage of the heat treatment process, as the produce enters the interior cavity 14 and passes into the cavity space 14a, the superheated steam of the produce heating means is discharged towards the produce on the conveyor 22 from the lower surface 28 of the plenum manifolds 26. The concave shape of the lower surface 28 of the plenum manifolds 26 allows the discharged superheated steam to impinge directly on the produce. Since the interior cavity 14 is exposed to ambient atmospheric pressure, the superheated steam contacting the produce immediately condenses causing the exterior surfaces of the produce to rapidly increase in temperature to, or substantially to, 100°C.

In a third stage of the heat treatment process, due to the cavity heating means, the external surface temperature of the produce is further raised to above 100°C as the produce progresses through the cavity space 14a.

The cavity space 14a is maintained at a temperature above 100°C by the cavity heating means. The warming means of the cavity heating means pre-heats and maintains the temperature of the apparatus within the enclosure 10 during use; the lower surfaces 28 of the plenum manifolds 26 and the plate member 23c of the conveyor 22 are heated by a combination of the warming means and the discharge of the superheated steam in the second stage, and then radiate heat energy back into the cavity space 14a; and heat energy is inherently released, by the discharge of the superheated steam, into the cavity space 14a.

In a fourth stage of the heat treatment process, as the produce on the conveyor 22 leaves the cavity space 14a and approaches and exits the heating chamber 12 through the heating chamber outlet 18, the sudden exposure to ambient, or near ambient, temperature causes rapid surface boiling, or flashing off, of any liquid on the exterior surfaces of the produce.

The produce should be cooled as rapidly as possible in the fourth stage. This should, at the very least, take the form of chilling the produce to below 30°C within 2 minutes of it leaving the cavity space 14a. For frozen product, it is preferable that the produce exits the heat treatment apparatus into a cryogenic environment, such as liquid nitrogen. Alternatively, a fluidised bed with very cold air being passed therethrough could be used. However, any other suitable means for chilling the produce could be used, or a combination of means could be used. For example, although not particularly preferable, dousing the heat treated product with chilled water could be used.

The produce, still exhibiting the same, or substantially the same, original state, can then be collected and stored in any suitable known manner once it leaves the conveyor 22.

The combination of initial rapid surface heating by the superheated steam, further heating of the produce surface to temperatures in excess of 100°C, and rapid surface boiling off of liquid from the sudden exposure to ambient temperatures results in the required surface decontamination of the produce.

As an example, for the surface decontamination of herbs, the entire heat treatment process, from first stage to fourth stage, inclusive, typically takes in the order of 12 seconds using the heat treatment apparatus of the present invention. This is a reduction from an average time of 40 seconds for other known types of heat treatment apparatus.

For each type of produce, whether it is meat, poultry, fish, vegetables, fruit, or any other type of food or ingredient, and depending on the initial state of the produce to be heat treated, such as whether it is pre-cooked, uncooked or frozen, it must first be determined at what speed the produce should pass through the heat treatment apparatus. This is important. If the produce stays within the heat treatment apparatus for too long, the original state of the produce on exiting the heat treatment apparatus will be altered, for example uncooked produce may be cooked. However, if the produce passes through the heat treatment apparatus too quickly, the produce surface will not be sufficiently decontaminated.

In tests of the heat treatment apparatus with 59 samples of different herbs, the maximum bacteria level found in the untreated samples was > 10⁶ TVC.g⁻¹ (total viable count per gram). Following heat treatment, all samples returned levels of < 4 log and 56 of the samples out of the 59 samples returned levels of ≤ 2 log. This is an exceptionally low value for herbs.

The insulated enclosure could be dispensed with. However, this is likely to increase the operating costs and impact the efficiency of the apparatus.

Although the apparatus is preferably pre-warmed, and the warming means is operated to maintain the apparatus at the heated level throughout its operation, this could be dispensed with. However, means for preventing undesirable condensation in the heating chamber, on surfaces other than those of the produce being heat treated, must be used.

The interior cavity 14 could be defined, or substantially defined, by the interior surfaces of the insulated enclosure 10. In this case, inlet 16 and outlet 18 may include specific insulation therearound.

Specific heating means, such as a steam pipe or pipes, may also be disposed adjacent to the elongate plate member 23c of the conveyor 22.

Furthermore, the apparatus may be provided with curtains to further insulate the apparatus at the openings 20. The inlet 16 and outlet 18 may each be provided with an exhaust outlet. In this case, the exhaust outlet 32 may be dispensed with.

It is thus possible to provide heat treatment apparatus which is permanently exposed to ambient atmospheric pressure, and which can continuously heat treat produce to reduce levels of decontamination. It is further possible to provide heat treatment apparatus which can heat treat produce and retain the original state of the produce. It is also possible to provide heat treatment apparatus which can reduce levels of contamination of produce to ≤ 2 log. It is further possible to provide heat treatment apparatus which can treat any type of produce having any original state.

The embodiments described above are given by way of examples only, and modifications will be apparent to persons skilled in the art without departing from the scope of the invention as defined by the appended claims. For example, only one radiant plate may be provided.

## Claims

1. Heat treatment apparatus for surface decontamination of produce having an original state, the apparatus comprising a heating chamber (12) having an interior cavity (14) in which is defined a cavity space (14a) exposed to atmospheric pressure, an inlet (16) for the insertion of the produce into the interior cavity (14) and cavity space (14a), and an outlet (18) for the discharge of the produce from the interior cavity (14); a conveyor (22) on which the produce can be conveyed and which is in communication with the produce inlet (16), the produce outlet (18) and the cavity space (14a); means for heating the surface of the produce to a first temperature and then a second temperature, which is higher than the first temperature, when the produce is in the cavity space (14a); the arrangement and/or conditions being such that, on discharge, any surface liquid present on the produce is rapidly boiled off so that the surface of the produce is decontaminated or substantially decontaminated and the said original, or substantially original, state of the produce is retained.

2. Apparatus as claimed in claim 1, further comprising an insulated enclosure (10) surrounding the heating chamber (12), the insulated enclosure (10) having access to the produce inlet (16) and outlet (18).

3. Apparatus as claimed in claim 1 or claim 2, wherein the heating chamber (12) is positioned over only part of the conveyor (22).

4. Apparatus as claimed in any one of the preceding claims, wherein the heating means is in the form of produce heating means and cavity heating means.

5. Apparatus as claimed in claim 4, wherein the produce heating means comprises a superheated steam supply and a superheated steam outlet (24) connected to the superheated steam supply for discharging steam into the cavity space (14a) to heat the surface of the produce rapidly to, or substantially to, 100°C.

6. A method of decontaminating the exterior surface of produce without altering, or substantially altering, the original state of the produce, the method comprising the steps of:
a) raising only the exterior surface of the produce to, or substantially to, 100°C;
b) further raising only the exterior surface of the produce to above 100°C; and
c) rapidly boiling off any surface liquid present on the produce.

7. A method as claimed in claim 6, further comprising a step (d) subsequent to step (c) of rapidly cooling the surface of the produce.

8. A method as claimed in claim 7, wherein steps (a) to (d) are performed exposed to ambient atmospheric pressure.

9. A method as claimed in any one of claims 6 to 8, using heat treatment apparatus as claimed in any one of claims 1 to 5.

10. Decontaminated produce produced using a method as claimed in any one of claims 6 to 9.
